# FASCICULE DE BREVET EUROPEEN

(11) **EP 0 414 814 B1**
(45) Date de publication et mention de la délivrance du brevet: **26.10.1994**
(21) Numéro de dépôt: 89907061.9
(22) Date de dépôt: 07.07.1989
(51) Int. Cl.: B60B 19/00, B60G 3/00

(54) **ROUE POUR VEHICULE MOTORISE OU TRACTE ET VEHICULE EQUIPE D'UNE TELLE ROUE**
RAD EINES MOTORFAHRZEUGES ODER ANHÄNGERS UND EIN MIT DIESEM AUSGERÜSTETES FAHRZEUG
WHEEL FOR A MOTOR VEHICLE OR TOWED VEHICLE AND VEHICULE FITTED WITH SAID WHEEL

(30) Priorité: 11.07.1988 FR 8809627
(43) Date de publication de la demande: 06.03.1991
(73) Titulaire: SBL Société Brevets Licences S.A., CH-1217 MEYRIN/GE (CH)
(72) Inventeur: SBARRO, Franco, CH-1422 Les Tuileries-de-Grandson (CH)
(74) Mandataire: Nithardt, Roland
(86) Numéro de dépôt international: CH8900130
(87) Numéro de publication internationale: WO9000477

(56) Documents cités:
- DE-A- 3 408 874
- GB-A- 129 867
- GB-A- 1 148 021
- US-A- 2 843 426
- US-A- 4 045 096

## Description

La présente invention concerne une roue pour véhicule motorisé ou tracté, destinée à se déplacer sur une surface d'appui déterminée, comportant une partie centrale liée à la structure de base du véhicule et une partie périphérique concentrique par rapport à ladite partie centrale et agencée pour tourner autour de cette dernière, dans laquelle ladite partie centrale et ladite partie périphérique sont couplées entre elles par au moins un roulement comprenant au moins un élément annulaire intérieur solidaire de ladite partie centrale et au moins un élément annulaire extérieur, concentrique audit élément annulaire intérieur et solidaire de ladite partie périphérique, cette dernière portant un organe de contact correspondant à la nature de la surface d'appui du véhicule.

Elle concerne également une roue pour véhicule motorisé ou tracté, destinée à se déplacer sur une surface d'appui déterminée, comportant une partie stationnaire liée à la structure de base du véhicule et une partie rotative concentrique à ladite première partie et agencée pour tourner autour de celle-ci, la partie stationnaire et la partie rotative étant couplées directement entre elles par au moins un roulement comprenant un élément annulaire intérieur et un élément annulaire extérieur, ladite seconde partie portant un organe de contact qui correspond à la nature de la surface d'appui du véhicule.

Elle concerne également un véhicule motorisé ou tracté équipé de telles roues.

Les roues de la plupart des véhicules actuels, et plus particulièrement des véhicules routiers tels que les voitures de tourisme, les motocyclettes, les poids lourds, les remorques etc. ou des véhicules sur rails tels que certains trains, notamment les trains à grande vitesse, sont du type à moyeu. Le moyeu, qui a habituellement un diamètre très inférieur à celui de la roue, comporte une partie centrale solidaire de la structure de base du véhicule et une partie périphérique concentrique à cette partie centrale, et agencée pour tourner autour de cette dernière.

Dans le cas d'un véhicule routier, la roue se compose d'une jante portant un pneumatique et d'un flasque latéral équipé de moyens de fixation, tels que par exemple des boulons, permettant de solidariser la roue au moyeu correspondant. Dans le cas de certains véhicules sur rails, la roue se compose d'une ceinture annulaire profilée pourvue d'une surface d'appui adaptée au rail, et d'un flasque permettant de fixer la roue au moyeu.

La transmission des forces de mise en mouvement, ainsi que la transmission des forces de freinage s'effectuent toujours à travers le moyeu, c'est-à-dire en des points relativement éloignés des points de contact de l'organe de contact de la roue avec la surface d'appui du véhicule. Dans le cas d'un véhicule automobile, l'entraînement se fait au travers du moyeu, qui transmet le mouvement par la jante au pneumatique, la résultante recherchée étant le déplacement relatif de la surface de contact du pneumatique par rapport au revêtement routier. De même, lors du freinage, les forces, qui en dernier ressort doivent aboutir à une réduction du déplacement relatif de la surface de contact du pneumatique par rapport au revêtement routier, sont appliquées sur un disque ou sur une surface de frottement liée au moyeu et transmises par l'intermédiaire de la jante au point terminal. Ces transmissions de forces mettent en jeu des bras de levier importants, ce qui nécessite des constructions très robustes, relativement lourdes et souvent surdimensionnées pour des raisons de sécurité.

D'un point de vue cinématique, ce type de construction présente de très nombreux inconvénients. Les conséquences en sont multiples et les solutions qui ont été adoptées pour résoudre les problèmes de suspension, de tenue de route, de freinage, de transmission de la puissance sont de plus en plus sophistiquées tout en restant, malgré tout, des solutions de compromis. En raison du poids des moyeux de roues et des organes qui s'y rattachent, les inerties à rattraper par les suspensions et par l'amortissement sont importantes, ce qui engendre des conséquences très négatives sur la tenue de route du véhicule. Dans la pratique, l'organe de contact, qui est généralement un pneumatique du moins pour les véhicules routiers, est d'autant plus difficile à maintenir en contact avec les surfaces d'appui que les masses non suspendues sont importantes. Or si le contact du pneumatique avec le revêtement routier est mauvais, la tenue de route du véhicule est mauvaise et la conduite de ce dernier devient dangereuse, en particulier sur un revêtement routier irrégulier.

Différentes approches ont été faites pour tenter de résoudre ces problèmes. La demande de brevet allemand publiée sous le N° DE-A-3 408 874 a décrit une roue pourvue d'un roulement de grand diamètre et théoriquement dépourvue de moyeu. Dans une des réalisations décrites, la partie intérieure de cette roue comporte cependant un élément de support diamétral dont les deux extrémités constituent les points d'ancrage de cette roue. Dans la pratique, l'existence de ce support équivaut à une extension en dimensions du moyeu, notamment lorsque ce support est utilisé pour le montage d'un bras de suspension télescopique. Cette roue ne convient pas à un véhicule à deux roues, et en particulier comme roue avant directrice d'une motocyclette. Enfin l'intérieur de la roue n'est pas dégagé et ne permet pas la mise en place de composants ou d'organes de fonctionnement du véhicule. Dans une autre réalisation, la partie intérieure de cette roue comporte un support en forme de secteur circulaire dont les deux extrémités angulairement éloignées de 90° définissent deux points d'ancrage fixe de la roue. Ces deux points sont, comme dans la réalisation précédente, reliés par un élément rigide.

La présente invention se propose de pallier les divers inconvénients des constructions connues en réalisant une roue telle que mentionnée en préambule, qui permet de réduire considérablement les bras de levier pour la transmission des forces d'entraînement et de freinage, de positionner les points d'articulation de la suspension du véhicule en des endroits considérablement plus proches de la surface d'appui du véhicule, et d'alléger d'un facteur élevé les moyens de couplage à la structure de base du véhicule. En outre, ce concept permet de libérer totalement l'intérieur de la roue pour autoriser la mise en place de composants, d'organes de fonctionnement ou d'accessoires du véhicule. Enfin, cette roue selon l'invention peut être adaptée indifféremment à l'avant ou à l'arrière d'un véhicule routier à deux ou à quatre roues, à des véhicules de chantier ou à des véhicules sur rails.

Selon un premier mode de réalisation, ce but est atteint par la roue selon l'invention, caractérisée en ce que ledit élément annulaire intérieur est liée à la structure de base du véhicule au moyen d'un bras articulé sur un axe de pivotement solidaire de cette structure de base, ce bras étant équipé d'au moins une patte fixée rigidement audit élément annulaire intérieur par des boulons, ladite patte étant localisée en une zone d'ancrage unique ménagée à proximité de la partie inférieure de la roue.

De préférence, l'élément annulaire extérieur du roulement porte une pièce annulaire comportant deux faces sensiblement planes constituant un anneau de freinage et l'élément annulaire intérieur du roulement porte au moins une mâchoire de freinage agencée pour coopérer avec ledit anneau.

Cet élément annulaire intérieur peut être associé à un support tubulaire, et l'espace intérieur de ce support tubulaire peut contenir des organes de fonctionnement du véhicule.

Selon un second mode de réalisation, l'invention concerne une roue pour véhicule motorisé ou tracté, destinée à se déplacer sur une surface d'appui déterminée, comportant une partie stationnaire liée à la structure de base du véhicule et une partie rotative concentrique à ladite première partie et agencée pour tourner autour de celle-ci, la partie stationnaire et la partie rotative étant couplées directement entre elles par au moins un roulement comprenant un élément annulaire intérieur et un élément annulaire extérieur, ladite partie rotative portant un organe de contact qui correspond à la nature de la surface d'appui du véhicule, caractérisée en ce que l'élément annulaire de ladite partie stationnaire est liée à la structure de base du véhicule au moyen de deux bras de suspension respectivement articulés sur cette structure de base par une de leurs extrémités et respectivement articulés à l'élément annulaire de ladite partie stationnaire par leurs autres extrémités, en deux points diamétralement opposés dudit élément annulaire, l'un de ces points étant localisé en une zone d'ancrage ménagée à proximité de la partie inférieure de la roue.

Selon ce mode de réalisation, une roue destinée à servir de roue directrice peut comporter des moyens pour coupler l'élément annulaire de la partie stationnaire à au moins une barre de direction du véhicule.

Dans une application à une roue motrice, une réalisation avantageuse consiste en ce que l'élément annulaire extérieur du roulement appartient à la partie stationnaire et l'élément annulaire intérieur du roulement appartient à la partie rotative, et l'élément annulaire intérieur du roulement est associé à des organes pour accoupler cette roue aux moyens d'entraînement d'un véhicule. De préférence, lesdits organes pour accoupler cette roue aux moyens d'entraînement du véhicule comprennent une structure tronconique attachée à l'élément annulaire extérieur par au moins une biellette articulée. Cette structure tronconique peut être réalisée en un matériau composite allégé.

Selon une variante, les organes pour accoupler cette roue aux moyens d'entraînement du véhicule comprennent une couronne dentée agencée pour recevoir une chaîne ou pour engrener un pignon d'entraînement.

Dans le second mode de réalisation, on peut prévoir que l'élément annulaire intérieur du roulement appartient à la partie stationnaire et l'élément annulaire extérieur du roulement appartient à la partie rotative, que l'élément annulaire extérieur du roulement porte un anneau de freinage et que l'élément annulaire intérieur du roulement porte au moins une mâchoire de freinage agencée pour coopérer avec ledit anneau.

Cet élément annulaire intérieur peut être associé à un support tubulaire, et l'espace intérieur de ce support tubulaire peut contenir des organes de fonctionnement du véhicule.

La présente invention sera mieux comprise en référence à la description d'exemples de réalisation et du dessin annexé dans lequel :
la fig. 1 représente une vue en élévation d'une forme de réalisation particulière d'une roue selon l'invention constituant, par exemple, la roue avant qui est la roue directrice d'un véhicule à deux roues,
la fig. 2 représente une vue en coupe diamétrale d'une forme particulière d'une roue d'entraînement d'un véhicule routier à quatre roues,
les fig. 3 et 4 représentent une vue d'une forme de réalisation particulière d'une roue directrice d'un véhicule routier à quatre roues,
les fig. 5A et 5B représentent une vue schématique illustrant une utilisation particulière de la roue selon l'invention,
les fig. 6A et 6B représentent une vue schématique illustrant une autre utilisation particulière d'une roue selon l'invention,
les fig. 7A et 7B représentent une vue schématique illustrant encore une autre utilisation particulière de la roue selon l'invention, et
les fig. 8A et 8B illustrent une application des roues selon l'invention pour la réalisation d'une plate-forme de dépannage.

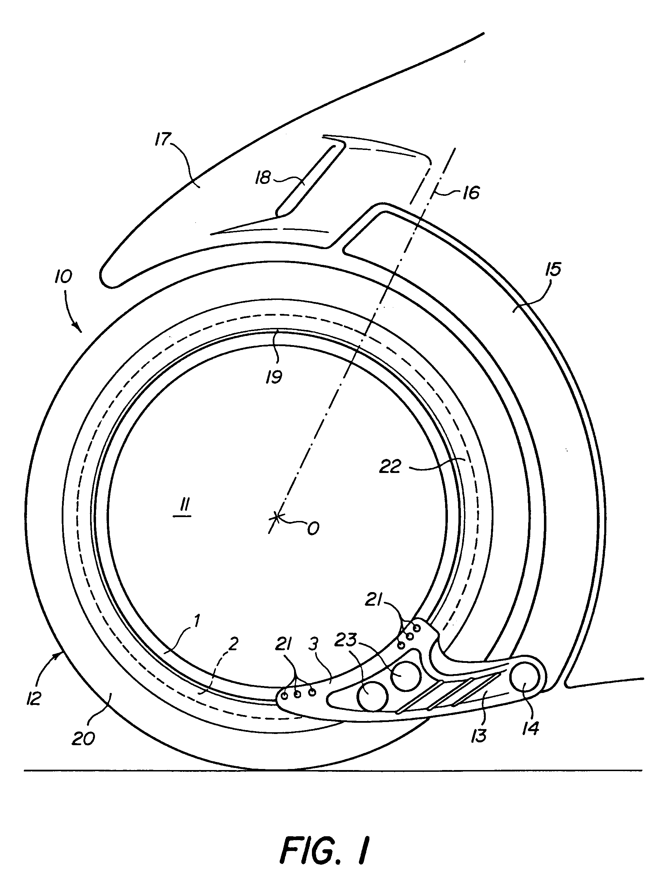

En référence à la fig. 1, la roue 10 représentée comporte essentiellement une partie centrale 11 et une partie périphérique 12 concentrique à la partie centrale 11. La partie centrale 11 est rendue solidaire de la structure de base du véhicule, par exemple d'un bras 13 monté sur un axe de pivotement 14 fixé à un élément 15 du châssis ou directement à un support du moteur du véhicule à deux roues. Cet élément 15 est solidaire d'une fourche dont l'axe théorique est représenté par la ligne 16 qui passe par le centre immatériel O de la roue 10. Un carénage 17 portant un phare 18 est représenté schématiquement. La partie centrale 11 et la partie périphérique 12 sont couplées entre elles par un roulement 19 qui comporte un élément annulaire intérieur 1 et un élément annulaire extérieur 2, solidaires l'un de l'autre d'une manière connue en soi par l'intermédiaire de billes, de cônes ou d'aiguilles. Le roulement 19 est en fait un roulement standard, de grande dimension, ayant la caractéristique d'être parfaitement étanche et de résister aux contraintes relativement élevées auxquelles il peut être soumis dans une utilisation sur véhicule routier, véhicule sur rails, ou véhicule tout terrain. Ce type de roulement comporte une ou plusieurs couronnes de billes séparées les unes des autres pour éviter qu'elles se touchent et subissent de ce fait des échauffements et de l'usure.

Comme le véhicule auquel est destinée la roue représentée par la fig. 1 est un véhicule routier, cette roue comporte un organe de contact 20 qui est en fait un pneumatique monté sur une jante (non représentée), solidaire de l'élément extérieur du roulement. L'élément intérieur du roulement, qui a une forme tubulaire ou qui peut être associé à un élément de support tubulaire, est fixé par des moyens conventionnels, par exemple des boulons 21, au bras 13. A cet effet, l'élément intérieur du roulement comporte avantageusement des pattes sur lesquelles se fixent les boulons 21.

Une seule patte 3 disposée dans la zone la plus basse de la roue suffit pour maintenir cette roue. L'avantage de cette fixation, prévue pour des véhicules routiers à performances élevées, tels que les automobiles, les motocyclettes, les poids-lourds etc., est que la roue est tenue dans une zone qui se situe aussi près que possible de la surface d'appui. On évite ainsi tous les bras de leviers dus au renvoi des forces et des contraintes au moyeu comme cela se fait obligatoirement sur les roues classiques. La partie extérieure du roulement porte par ailleurs un anneau de freinage 22, de grand diamètre et de relativement faible largeur, qui collabore avec des mâchoires de freinage 23 montées sur le bras 13. Grâce à cette géométrie, le freinage s'effectue dans une zone très proche du revêtement routier et son efficacité est d'autant plus grande que les force de freinage sont transmises directement à la roue, dans la zone qui est immédiatement voisine du point de contact entre le pneumatique et le revêtement routier, et que la surface de l'anneau est grande en raison de son grand diamètre.

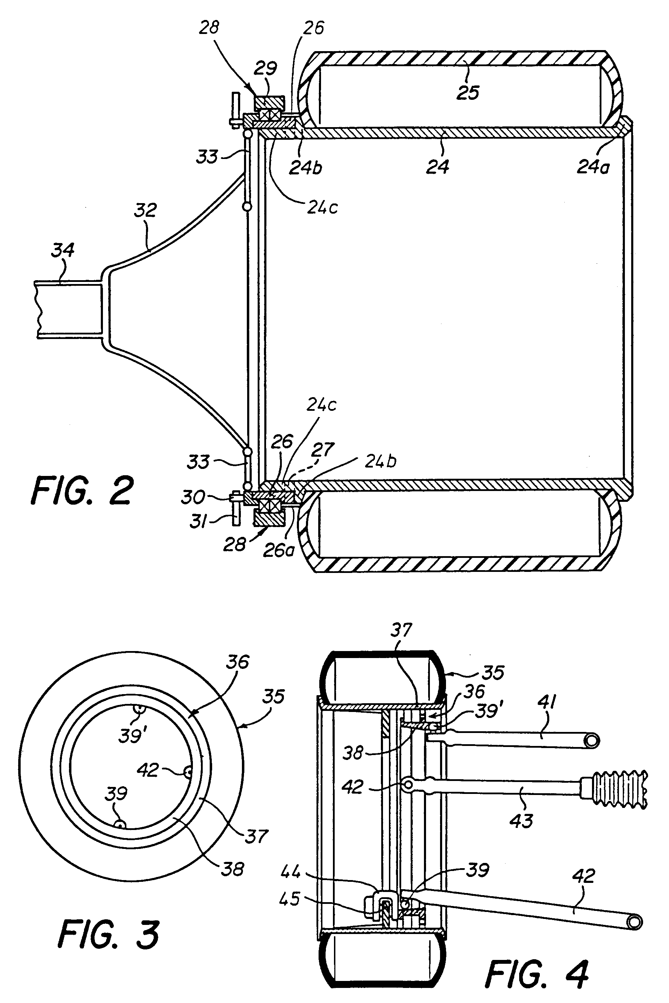

La roue représentée par la fig. 2 est une roue d'entraînement d'automobile. Elle comporte une jante 24 portant un pneumatique 25 bloqué entre deux rebords latéraux 24a et 24b. Le rebord latéral 24b est solidaire d'un prolongement latéral 24c de la jante, prolongement qui porte l'élément annulaire intérieur rotatif 26 du roulement 28, dont l'élément annulaire extérieur stationnaire 29 est lié au châssis du véhicule. L'élément annulaire intérieur 26 est fixé au prolongement latéral 24c de la jante au moyen de boulons 27. Des moyens de fixation classiques, tels que des boulons 30, assurent la tenue d'un anneau de freinage 31, sensiblement identique à l'anneau 22 décrit en référence à la fig. 1.

L'élément annulaire 26 peut, par ailleurs, porter une couronne dentée 26a agencée pour coopérer avec une chaîne couplée à un pignon d'entraînement (non représenté).

L'entraînement de la roue, qui en raison de la construction particulière de cette roue doit être transmis à l'élément intérieur 26 du roulement 28, peut être réalisé sous la forme d'une pièce tronconique 32, réalisée en un matériau composite particulièrement léger, tel que par exemple les fibres de carbone et couplée audit élément extérieur par trois biellettes 33. Un axe d'entraînement 34, couplé audit élément 32, est lié d'une manière conventionnelle aux organes de transmission du véhicule. Les biellettes sont articulées à leurs deux extrémités, respectivement sur la jante et sur la pièce tronconique.

Les fig. 3 et 4 représentent une autre forme de réalisation d'une roue directrice 35 d'un véhicule routier. Comme précédemment cette roue comporte un roulement 36 comprenant une partie extérieure 37 et une partie intérieure 38. La partie intérieure 38 du roulement 36, est fixée à la structure de base du véhicule en au moins un point 39. Pour utiliser cette roue sur des véhicules comportant deux bras de suspension classiques 40 et 41 connus en soi, la partie intérieure 38 du roulement peut comporter deux points de fixation 39 et 39'. Un troisième point d'attache 42, également prévu sur l'élément intérieur 38 du roulement 36, permet de coupler une barre de direction 43 connue en soi. Au point 39, la partie intérieure 38 porte une mâchoire de frein 44 agissant sur un anneau de freinage 45 solidaire de la partie extérieure 37.

On notera que, contrairement au système classique où les trois points d'attache sont prévus sur le moyeu, c'est-à-dire répartis sur un périmètre relativement petit, les trois points d'attache 39, 39' et 42 de la roue représentée par les figures 3 et 4, sont relativement éloignés les uns des autres, ce qui augmente considérablement leur efficacité et permet, aussi bien au niveau de la direction qu'au niveau de la suspension de réduire fortement les contraintes, et par conséquent de diminuer le poids des pièces utilisées et d'augmenter l'efficacité des composants. Il en résultera en particulier une direction extrêmement précise du véhicule.

Un autre avantage du système provient du fait que le centre de la roue est totalement dégagé, ce qui met à la disposition du constructeur un espace libre permettant de loger différentes pièces telles que par exemple des silencieux pour l'échappement, etc. En outre, sur le plan esthétique et aérodynamique, la roue peut être presque entièrement carénée et des solutions nouvelles peuvent être proposées pour le refroidissement des systèmes de freinage dont l'efficacité et la précision seront considérablement augmentées.

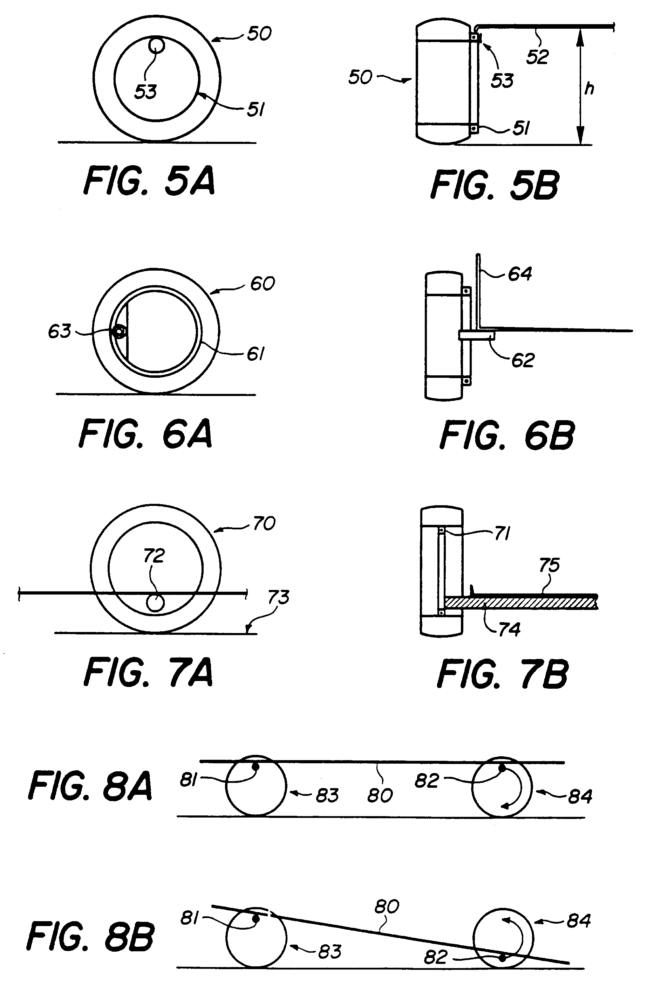

Pour des véhicules d'utilisation particulière, tels que les véhicules tous terrains où une garde au sol ausi grande que possible est beaucoup plus importante que les performances routières, la roue selon l'invention présente également des avantages tout à fait uniques. Certains tracteurs à vignes doivent avoir une garde au sol très importante pour permettre au viticulteur d'enjamber les cépages. La roue selon l'invention permet de réaliser de tels véhicules d'une manière simple et économique. Il suffit dans ce cas de prévoir un point d'ancrage de la roue dans une zone décentrée aussi élevée que possible. Un tel agencement est illustré par les fig. 5A et 5B. La roue 50 comporte, comme précédemment, un roulement 51. L'élément annulaire extérieur rotatif du roulement est solidaire de la jante. L'élément annulaire intérieur fixe du roulement est rendu solidaire d'un bras de suspension 52 en un point décentré 53 qui est localisé dans la zone de la partie centrale de la roue la plus haute, c'est-à-dire la plus éloignée de la surface d'appui. Il en résulte une garde au sol **h** qui est très proche du diamètre de la roue.

Pour des remorques à suspension intégrée dans la roue, qui comportent traditionnellement un axe transversal portant à chaque extrémité un bras relié au moyeu d'une roue, la roue selon l'invention, représentée par les fig. 6A et 6B, permet une construction simple et efficace. La roue 60, qui comporte un roulement 61, est fixée à un arbre transversal 62 ou un pivot au moyen d'une liaison élastique du type à torsion-friction qui constitue une suspension 63. Le point d'attache s'effectue dans une zone décentrée située à mi-hauteur de la roue. Ce système est équivalent, au point de vue suspension, à un système classique à bras de suspension reliant le moyeu. La plate-forme ou la carcasse 64 de la remorque peut être fixée directement au pivot 62.

Pour des remorques à charges lourdes, on peut prévoir, comme le montrent les fig. 7A et 7B, une roue 70 ayant au moins un roulement 71 dont l'élément annulaire extérieur porte la jante et dont l'élément annulaire intérieur est pourvu d'un point d'attache 72, disposé en un point aussi proche que possible de la surface d'appui 73. Un châssis 74, portant par exemple une plate-forme 75, est directement fixé au point d'attache décentré 72.

Une variante de ces différents modes de fixation est illustrée par les fig. 8A et 8B. Pour réaliser par exemple un véhicule de dépannage à chargement rapide, on peut monter une plate-forme 80 en deux zones décentrées 81 et 82 de deux roues 83 et 84 à roulement, telles que décrites ci-dessus. Pour une utilisation routière, les deux points d'attache 81 et 82 se trouvent en position haute. Lorsque l'on abaisse, par un moyen approprié, le point d'attache 82 de la roue 84 dans une position basse, la plate-forme 80 devient une rampe de chargement rapide particulièrement appropriée pour le dépannage de véhicules. Pour effectuer cette opération il faut prévoir un dispositif solidaire du châssis de la remorque permettant de faire tourner l'élément annulaire intérieur du roulement de 180° autour d'un axe central (non représenté).

Outre ces avantages, le fait, mentionné précédemment, que la partie centrale de la roue, qui est de construction tubulaire, offre un espace disponible pour la mise en place de composants, qui, jusqu'à présent, devaient être logés à l'extérieur de la roue, présente un avantage considérable. En particulier, l'intérieur de la roue arrière d'une motocyclette peut être utilisé pour loger le silencieux de l'échappement. Les cale-pieds du passager arrière peuvent être fixés directement sur l'élément intérieur du roulement. Cet espace pourrait également être utilisé pour loger d'autres composants tels que par exemple le réservoir à essence, la boîte de vitesses, etc. Une géométrie tout à fait nouvelle des véhicules peut en résulter. Des avantages particuliers en découlent, notamment l'abaissement considérable du centre de gravité, ce qui confère à ce type de véhicules une grande stabilité et une bonne tenue de route et, par conséquent, une sécurité jamais atteinte.

Bien que les figures ne représentent que des roues correspondant à des véhicules routiers, il est bien entendu que ce type de roue peut également être utilisé pour des véhicules sur rails. Dans ce cas, les pneumatiques peuvent être remplacés par des pièces annulaires profilées de façon appropriée pour s'adapter au profil des rails.

L'existence d'une partie centrale tubulaire non rotative facilite également considérablement l'accouplement de deux ou plusieurs roues, ce qui peut être relativement intéressant pour des véhicules spéciaux destinés à se déplacer dans des terrains marécageux ou particulièrement mous, ou pour des véhicules militaires.

La caractéristique fondamentale de l'invention réside dans le couplage de la partie intérieure et de la partie extérieure de la roue par un roulement de grande dimension, cette roue se comportant alors comme une chenillette rigide. Les conséquences sont essentiellement dues au fait que la partie centrale de la roue est évidée ce qui permet de réaliser d'importantes innovations techniques et esthétiques.

## Revendications

1. Roue pour véhicule motorisé ou tracté, destinée à se déplacer sur une surface d'appui déterminée, comportant une partie centrale liée à la structure de base du véhicule et une partie périphérique concentrique par rapport à ladite partie centrale et agencée pour tourner autour de cette dernière, dans laquelle ladite partie centrale (11) et ladite partie périphérique (12) sont couplées directement entre elles par au moins un roulement (19) comprenant au moins un élément annulaire intérieur (1) solidaire de ladite partie centrale et au moins un élément annulaire extérieur (2), concentrique audit élément annulaire intérieur et solidaire de ladite partie périphérique, cette dernière portant un organe de contact (20) correspondant à la nature de la surface d'appui du véhicule, caractérisée en ce que ledit élément annulaire intérieur (1) est liée à la structure de base du véhicule au moyen d'un bras (13) articulé sur un axe transversal de pivotement (14) solidaire de cette structure de base, ce bras étant équipé d'au moins une patte (3) fixée rigidement audit élément annulaire intérieur (1), ladite patte étant localisée en une zone d'ancrage unique ménagée à proximité de la partie inférieure de la roue.

2. Roue selon la revendication 1, caractérisée en ce que l'élément annulaire extérieur (2) du roulement porte un anneau de freinage (22) et en ce que ledit bras (13) porte au moins une mâchoire de freinage (23) agencée pour coopérer avec ledit anneau.

3. Roue selon la revendication 1, caractérisée en ce que l'élément annulaire intérieur (1) est associé à un support tubulaire, et en ce que l'espace intérieur de ce support tubulaire contient des organes de fonctionnement du véhicule.

4. Roue pour véhicule motorisé ou tracté, destinée à se déplacer sur une surface d'appui déterminée, comportant une partie stationnaire (29, 38) liée à la structure de base du véhicule et une partie rotative (24-26, 37) concentrique à ladite première partie et agencée pour tourner autour de celle-ci, la partie stationnaire et la partie rotative étant couplées directement entre elles par au moins un roulement (28, 36) comprenant un élément annulaire intérieur (26, 38) et un élément annulaire extérieur (29, 37), ladite seconde partie portant un organe de contact (25, 35) qui correspond à la nature de la surface d'appui du véhicule, caractérisée en ce que l'élément annulaire (29, 38) de ladite partie stationnaire (29, 38) est lié à la structure de base du véhicule au moyen de deux bras de suspension (41 et 42) respectivement articulés sur cette structure de base par une de leurs extrémités et respectivement articulés à l'élément annulaire (29, 38) de ladite partie stationnaire par leurs autres extrémités, en deux points diamétralement opposés (39, 39') dudit élément annulaire, l'un (39) de ces points étant localisés en une zone d'ancrage ménagée à proximité de la partie inférieure de la roue.

5. Roue selon la revendication 4, caractérisée en ce qu'elle comporte des moyens (42) pour coupler l'élément annulaire (38) de ladite partie stationnaire à au moins une barre de direction (43) du véhicule.

6. Roue selon la revendication 4, caractérisée en ce que l'élément annulaire extérieur (29) du roulement (28) appartient à la partie stationnaire et l'élément annulaire intérieur (26) du roulement (28) appartient à la partie rotative, et en ce que l'élément annulaire intérieur (26) du roulement (28) est associé à des organes pour accoupler cette roue aux moyens d'entraînement d'un véhicule.

7. Roue selon la revendication 6, caractérisée en ce que lesdits organes pour accoupler cette roue aux moyens d'entraînement du véhicule comprennent une structure tronconique (32) attachée à l'élément annulaire intérieur (26) par au moins une biellette articulée (33).

8. Roue selon la revendication 7, caractérisée en ce que la structure tronconique (32) est réalisée en un matériau composite allégé.

9. Roue selon la revendication 6, caractérisée en ce que lesdits organes pour accoupler cette roue aux moyens d'entraînement du véhicule comprennent une couronne dentée (26a) agencée pour recevoir une chaîne ou pour engrener un pignon d'entraînement.

10. Roue selon la revendication 4, caractérisée en ce que l'élément annulaire intérieur (38) du roulement (36) appartient à la partie stationnaire et l'élément annulaire extérieur (37) du roulement (36) appartient à la partie rotative, en ce que l'élément annulaire extérieur (37) du roulement (36) porte un anneau de freinage (45) et en ce que l'élément annulaire intérieur (38) du roulement porte au moins une mâchoire de freinage (44) agencée pour coopérer avec ledit anneau.

11. Roue selon la revendication 10, caractérisée en ce que l'élément annulaire intérieur (38) est associé à un support tubulaire et en ce que l'espace intérieur de ce support tubulaire contient des organes de fonctionnement du véhicule.

12. Véhicule motorisé ou tracté, caractérisé en ce qu'il comporte au moins une roue selon l'une quelconque des revendications précédentes.

## Claims

1. A wheel for a motor vehicle or towed vehicle, designed to travel on a given support, comprising a central part connected to the basic structure of the vehicle and a peripheral part concentric with respect to said central part and designed to rotate around the latter, in which said central part (11) and said peripheral part (12) are directly coupled by at least one bearing (19) comprising at least one inner annular element (1) integral with said central part and at least one outer annular element (2), concentric to said inner annular element and integral with said peripheral part, this latter bearing a contact element (20) corresponding to the nature of the support surface of the vehicle, characterized in that said inner annular element (1) is connected to the basic structure of the vehicle by means of one arm mounted on a transverse swivel axis (14) integral with the basic structure, this arm being provided with at least one lug (3) rigidly attached to said inner annular element, said lug being positioned in a single zone of anchoring provided near the lower part of the wheel.

2. A wheel according to claim 1, characterized in that the outer annular element (2) of the bearing bears a braking ring (22) and in that said arm (13) bears at least one braking jaw designed to cooperate with said ring.

3. A wheel according to claim 1, characterized in that the inner annular element (1) is joined to a tubular support, and in that the interior space of this tubular support contains the vehicle's operating components.

4. A wheel for a motor vehicle or towed vehicle, designed to travel on a given support, comprising a stationary part (29, 38) connected to the basic structure of the vehicle and a rotary part (24-26, 37) concentric with respect to said first part and designed to rotate around the latter, the stationary part and the rotary part being directly coupled by at least one bearing (28, 36) comprising one inner annular element (26, 38) and one outer annular element (29, 37), said second part bearing a contact element (25, 35) corresponding to the nature of the support surface of the vehicle, characterized in that the annular element (29, 38) of said stationary part (29, 38) is connected to the basic structure of the vehicle by means of two suspension arms (41 and 42) respectively jointed to this basic structure by one of their ends and respectively joined to the annular element (29, 38) of said stationary part by their other end in two diametrically opposite points (39, 39') of said annular element, one (39) of these points being located in an anchoring zone situated near the lower part of the wheel.

5. A wheel according to claim 4, characterized in that it comprises means (42) for coupling the annular element (38) of said stationary part to at least one steering column (43) of the vehicle.

6. A wheel according to claim 4, characterized in that the outer annular element (29) of the bearing (28) belongs to the stationary part and the inner annular element (26) of the bearing (28) belongs to the rotary part, and in that the inner annular element (26) of the bearing (28) is connected to components for coupling this wheel to the vehicle's drive means.

7. A wheel according to claim 6, characterized in that said components for coupling this wheel to the vehicle's drive means comprise a structure (32) in the shape of a truncated cone attached to the inner annular element (26) by at least one small hinged rod (33).

8. A wheel according to claim 7, characterized in that the structure (32) in the shape of a truncated cone is made of a light-weight composite material.

9. A wheel according to claim 6, characterized in that said components for coupling this wheel to the vehicle's drive means comprise a sprocket (26a) designed to receive a chain or to engage a drive gear.

10. A wheel according to claim 4, characterized in that the inner annular element (38) of the bearing (36) belongs to the stationary part and the outer annular element (37) of the bearing (36) belongs to the rotary part, and in that the outer annular element (37) of the bearing (36) bears a braking ring (45) and in that the inner annular element (38) of the bearing bears at least a braking jaw (44) designed to cooperate with said ring.

11. A wheel according to claim 10, characterized in that the inner annular element (38) is joined to a tubular support, and in that the interior space of this tubular support contains the vehicle's operating components.

12. A motor vehicle or towed vehicle, characterized in that it comprises at least one wheel according to any one of the preceding claims.

## Patentansprüche

1. Rad eines mit einem Motor versehenen oder gezogenen Fahrzeugs, das dazu vorgesehen ist, sich auf einer bestimmten Auflagefläche fortzubewegen, versehen mit einem mit dem Rahmen des Fahrzeugs verbundenen Mittelteil und einem bezüglich des Mittelteils konzentrischen Umfangsteil, der so angeordnet ist, daß er sich um den Mittelteil dreht, wobei der Mittelteil (11) und der Umfangsteil (12) direkt durch wenigstens ein Lager (19) miteinander verbunden sind, das wenigstens ein ringförmiges, mit dem Mittelteil verbundenes, Innenelement (1) und wenigstens ein ringförmiges, zum ringförmigen Innenelement konzentrisches und mit dem Umfangsteil verbundenes, Außenelement (2) aufweist, wobei das Außenelement (2) mit einem Kontaktelement (20) versehen ist, das der Art der Auflagefläche des Fahrzeugs entspricht,
**dadurch gekennzeichnet,** daß das ringförmige Innenelement (1) mit dem Rahmen des Fahrzeugs durch einen Arm (13) verbunden ist, der über ein Gelenk mit einer Querachse (14) verbunden ist, die zu dem Rahmen des Fahrzeugs gehört, wobei der Arm wenigstens mit einer auf dem ringförmigen Innenelement (1) starr befestigten Lasche (3) versehen ist, wobei sich die Lasche in einem einzigen Befestigungsbereich nahe dem unteren Teil des Rades befindet.

2. Rad nach Anspruch 1,
**dadurch gekennzeichnet,** daß das ringförmige Außenelement (2) des Lagers einen Bremsring (22) und der Arm (13) wenigstens eine Bremsbacke (23) aufweist, die so angeordnet ist, daß sie mit dem Ring zusammenwirkt.

3. Rad nach Anspruch 1,
**dadurch gekennzeichnet,** daß das ringförmige Innenelement (1) mit einem röhrenförmigen Stützelement verbunden ist, und der Innenraum des röhrenförmigen Stützelements Betriebselemente des Fahrzeugs aufweist.

4. Rad eines mit einem Motor versehenen oder gezogenen Fahrzeugs, das dazu vorgesehen ist, sich auf einer bestimmten Auflagefläche fortzubewegen und das mit einem feststehenden, mit dem Rahmen des Fahrzeugs verbundenen, Teil (29,38), und einem rotierenden Teil (24-26,37) versehen ist, das zum ersten Teil konzentrisch und drehbar um diesen angeordnet ist, wobei der feststehende Teil und der rotierende Teil direkt durch wenigstens ein Lager (28,36) miteinander verbunden sind, das ein ringförmiges Innenelement (26,38) und ein ringförmiges Außenelement (29,37) aufweist, und wobei der zweite Teil ein Kontaktmittel (25,35) aufweist, das der Art der Auflagefläche des Fahrzeugs entspricht,
**dadurch gekennzeichnet,** daß das ringförmige Element (29,38) des feststehenden Teils (29,38) mit dem Rahmen des Fahrzeugs durch zwei Aufhängungen (41 und 42) verbunden ist, die jeweils an einem Ende über ein Gelenk mit dem Rahmen verbunden sind und mit dem ringförmigen Element (29,38) des feststehenden Teils am anderen Ende über ein Gelenk verbunden sind, und zwar an zwei diametral gegenüberliegenden Punkten (39,39') des ringförmigen Elements, wobei einer (39) der Punkte sich in einem Befestigungsbereich nahe dem unteren Teil des Rades befindet.

5. Rad nach Anspruch 4,
**dadurch gekennzeichnet,** daß Mittel (42) zur Verbindung des ringförmigen Elements (38) des feststehenden Teils mit wenigstens einer Spurstange (43) des Fahrzeugs vorgesehen sind.

6. Rad nach Anspruch 4,
**dadurch gekennzeichnet,** daß das ringförmige Außenelement (29) des Lagers (28) mit dem feststehenden Teil in Verbindung steht, und daß das ringförmige Innenelement (26) des Lagers (28) mit dem rotierenden Teil in Verbindung steht, und daß das ringförmige Innenelement (26) des Lagers (28) mit den Mitteln zur Verbindung des Rades mit den Antriebsmitteln eines Fahrzeugs verbunden ist.

7. Rad nach Anspruch 6,
**dadurch gekennzeichnet,** daß die Mittel zur Verbindung des Rades mit den Antriebsmitteln des Fahrzeuges einen konischen Aufbau aufweist, der am ringförmigen Innenelement (26) wenigstens durch eine drehbar gelagerte kleine Pleuelstange (33) befestigt ist.

8. Rad nach Anspruch 7,
**dadurch gekennzeichnet,** daß der konische Aufbau aus einem leichten Verbundwerkstoff hergestellt ist.

9. Rad nach Anspruch 6,
**dadurch gekennzeichnet,** daß die Mittel zur Verbindung des Rades mit den Antriebsmitteln des Fahrzeugs ein Zahnrad (26a) aufweisen, das so angeordnet ist, daß es eine Kette aufnimmt oder mit einem Antriebsgetrieberad in Eingriff steht.

10. Rad nach Anspruch 4,
**dadurch gekennzeichnet,** daß das ringförmige Innenelement (38) des Lagers (36) mit dem feststehenden Teil in Verbindung steht und das ringförmige Außenelement (37) des Lagers (36) mit dem rotierenden Teil in Verbindung steht, wobei das ringförmige Außenelement (39) des Lagers (36) einen Bremsring (45) aufweist und das ringförmige Innenelement (38) des Lagers wenigstens eine Bremsbacke (44) aufweist, die so angeordnet ist, daß sie mit dem Ring zusammenwirkt.

11. Rad nach Anspruch 10,
**dadurch gekennzeichnet,** daß das ringförmige Innenelement (38) mit einem röhrenförmigen Stützelement verbunden ist, und daß der Innenraum des röhrenförmigen Stützelements Betriebselemente des Fahrzeugs aufweist.

12. Mit einem Motor versehenes oder gezogenes Fahrzeug,
**dadurch gekennzeichnet,** daß es wenigstens ein Rad gemäß einem der vorstehenden Ansprüche aufweist.
